(19) **Europäisches Patentamt / European Patent Office / Office européen des brevets**

(11) **EP 2 999 219 B1**

(12) **EUROPEAN PATENT SPECIFICATION**

(45) Date of publication and mention
of the grant of the patent:
**06.03.2019 Bulletin 2019/10**

(51) Int Cl.:
*H04N 9/31* *(2006.01)*     *H04N 9/69* *(2006.01)*

(21) Application number: **15179913.7**

(22) Date of filing: **06.08.2015**

(54) **OUTPUT CONTROL APPARATUS AND OUTPUT CONTROL SYSTEM**

AUSGANGSSTEUERUNGSVORRICHTUNG UND AUSGANGSSTEUERUNGSSYSTEM

APPAREIL DE COMMANDE DE SORTIE ET SYSTÈME DE COMMANDE DE SORTIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2014 JP 2014188745**

(43) Date of publication of application:
**23.03.2016 Bulletin 2016/12**

(73) Proprietor: **Ricoh Company, Ltd.
Tokyo 143-8555 (JP)**

(72) Inventor: **NOSE, Masaki
Tokyo, 143-8555, (JP)**

(74) Representative: **SSM Sandmair
Patentanwälte Rechtsanwalt
Partnerschaft mbB
Joseph-Wild-Straße 20
81829 München (DE)**

(56) References cited:
**WO-A1-00/18138          WO-A2-2010/129361
US-A1- 2003 103 162     US-A1- 2005 103 976
US-A1- 2007 171 380     US-A1- 2013 265 342**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

1. Field of the Invention

The disclosures herein generally relate to an output control apparatus, an output control system, and a medium of an output control program.

2. Description of the Related Art

Multi projection has been used that has multiple projectors placed side by side, and pieces together images projected by the projectors, to display the images on a large screen. In the multi projection, to adjust individual differences of the projectors, a method has been known that captures test images for measurement that are projected by the projectors, and based on the captured test images for measurement, corrects color spots and shadings generated by the projectors (see, for example, Patent Document 1).

However, the method of Patent Document 1 described above calculates correction coefficients so that the brightness of the projectors is matched at the respective center positions of the projectors, which implies that the correction does not take the entire screen into consideration, and hence, correction precision is lowered inevitably. Also, it may be necessary to spend much adjustment time if executing gamma correction because the gamma correction needs to have test images for measurement of shades of RGB that are uniformly displayed on a projection plane, and to capture the test images for measurement of the shades. US 2005/103976 discloses calculating image correction data for a projection system. The input/output characteristics of several display elements in a display screen of image display device, is obtained based on image data captured by a camera. An image correction data is calculated based on obtained and target input/output characteristics for correcting the input/output characteristic of input image signals depending on position of display elements.

In view of the above, it is a general object of at least one embodiment of the present invention to adjust the display quality on a screen efficiently.

## SUMMARY OF THE INVENTION

According to an embodiment of the present invention, an output control apparatus configured to control color information of projection image data to be output to one or more output devices, includes a display characteristic extraction unit configured to extract a display characteristic of the output device from test patterns having been output from the output device, and including at least one of gradation information, brightness information, and chromaticity information; a correction value calculation unit configured to calculate a correction value of the output device, based on the display characteristic obtained by the display characteristic extraction unit; and a correction unit configured to correct the projection image data to be output to the output device, based on the correction value calculated by the correction value calculation unit;

sampling points used to calculate the correction values are spread in an entire projection surface;the correction values are calculated from data that is obtained by capturing an image of the projection surface as a whole; and the sampling points are continuous.

It is possible to adjust the display quality on the screen efficiently.

## BRIEF DESCRIPTION OF THE DRAWINGS

FIG. 1 is a diagram that illustrates an example of a basic configuration of an output control system according to an embodiment of the present invention;
FIG. 2 is a diagram that illustrates an example of a functional configuration of a control terminal according to the present embodiment;
FIG. 3 is a diagram that illustrates an example of a hardware configuration of a computer system;
FIG. 4 is a flowchart that illustrates an example of an output control process according to the present embodiment;
FIG. 5 is a diagram that illustrates an example of test patterns according to the present embodiment;
FIG. 6 is a diagram that illustrates an example of a gamma characteristic obtained from a test pattern;
FIGs. 7A-7C are diagrams that illustrate an example of gamma characteristics of multiple projectors;
FIGs. 8A-8C are diagrams that illustrate an example of adjustment of gamma characteristics of projectors;

FIG. 9 is a diagram that illustrates color temperatures of multiple projectors;

FIG. 10 is a diagram that illustrates an example of adjustment of multiple projectors; and

FIG. 11 is a diagram that illustrates an example of a look-up table used for correction.

## DESCRIPTION OF THE PREFERRED EMBODIMENTS

In the following, embodiments of the present invention will be described in detail.

<Basic configuration of output control system>

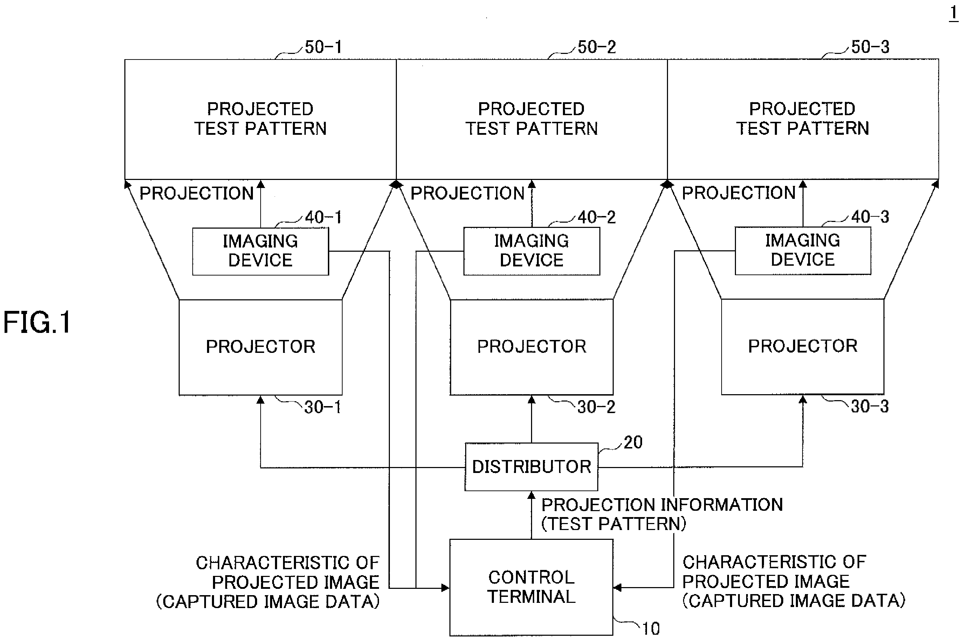

FIG. 1 is a diagram that illustrates an example of a basic configuration of an output control system 1 according to an embodiment of the present invention. As illustrated in FIG. 1, the output control system 1 includes a control terminal 10 as an example of an output control apparatus, a distributor 20, projectors 30 as examples of output devices, and imaging devices 40. In the example in FIG. 1, the projectors 30 include three projectors 30-1 to 30-3, but the number is not limited to three. The output control system 1 has, for example, the projectors 30-1 to 30-3 placed side by side, and controls outputting images by multi projection that implements displaying the images on a large screen.

The control terminal 10 is, for example, a note PC (Personal Computer). The control terminal 10 controls color information of projection image data that is output by the projectors 30-1 to 30-3 used in the multi projection. The control terminal 10 holds, for example, projection image data projected by the respective projectors 30, and outputs the data to the distributor 20. Also, to adjust individual differences of the projectors 30 for displaying images on the large screen as described above, the control terminal 10 has the projectors 30 project test patterns 50 on the screen. Also, the control terminal 10 obtains the test patterns 50 projected by the projectors 30 through the imaging devices 40, and depending on display characteristics of the projectors 30, corrects the projection image data projected by the projectors 30.

The distributor 20 receives the projection image data as input from the control terminal 10, and distributes the data to the projectors 30-1 to 30-3, depending on positional information such as placed positions of the projectors 30-1 to 30-3.

The projectors 30 may adopt, for example, a liquid crystal method, a DLP (Digital Light Processing) method, or an LCOS (Liquid Crystal On Silicon) method. For example, if adopting a DLP method, white light from a light source is colored by being transmitted through a color wheel that rotates at high speed. The light having been transmitted through the color wheel goes to a DMD (Digital Micro-mirror Device) that has minute mirrors arrayed for all pixels, on which on/off control is executed for selecting reflection or non-reflection. Then, the reflected light goes through an optical system to be projected on the screen.

In the example in FIG. 1, the projectors 30-1 to 30-3 project partial image data, respectively, that is included in the projection image data output by the control terminal 10, and distributed via the distributor 20. Thus, it is possible to implement multi projection to display the images on the large screen, which may not be easy when using other display devices, for example, an LCD (Liquid Crystal Display), a PDP (Plasma Display Panel), and an OLED (Organic Light Emitting Diode) display.

Assuming that the projectors 30 have the resolution of, for example, WXGA (1280x800 pixels), respectively, the projectors 30 form a projection image having 3840x800 pixels at the maximum. In this case, for example, projection images of the projectors 30 may be partially overlapped, and a blending process may be applied to the overlapped parts, to adjust the brightness of the overlapped parts for making them inconspicuous.

In the present embodiment, the projectors 30 project the same test patterns (projection information) 50 to adjust individual differences. The test patterns 50 may include a test pattern with, for example, at least one of gradation information, brightness information, and chromaticity information, which dominate display quality of multi projection. A specific example of the test patterns 50 will be described later.

The imaging devices 40 are, for example, digital cameras. The imaging device 40 captures an image of the test patterns 50 projected by a corresponding one of the projectors 30, and transmits captured image data (a characteristic of the projected image) to the control terminal 10. Note that the imaging device 40 may be, for example, a color luminance meter, a colorimeter, or a spectrometer. Also, the imaging device 40 may be built in the projector 30, or may be a digital camera or a smart phone externally attached to the projector 30.

In the output control system 1 in FIG. 1, the control terminal 10 calculates display characteristics of the respective projectors 30 from the test patterns 50 projected by the projectors 30 for multi projection, calculates correction values for reducing the individual differences, and controls outputting projection image data having correction values reflected. This makes it possible to adjust the display quality on the screen efficiently.

<Functional configuration of control terminal 10>

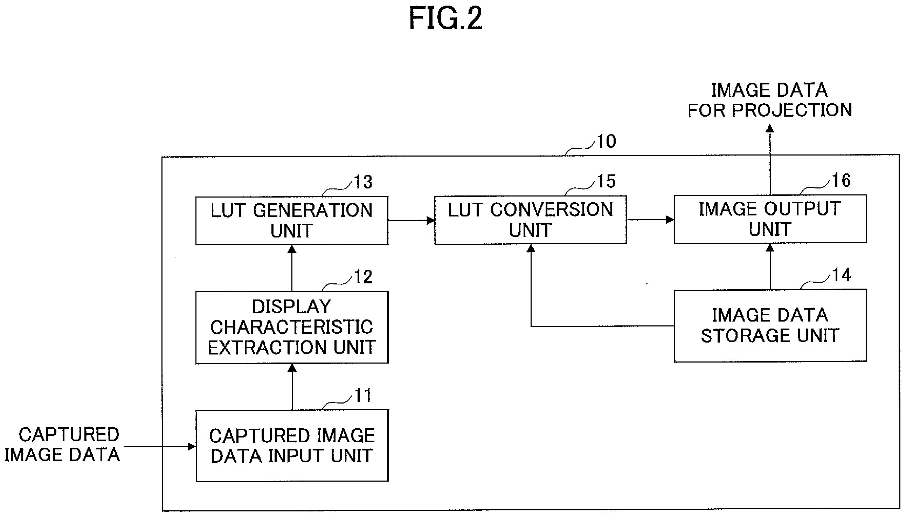

FIG. 2 is a diagram that illustrates an example of a functional configuration of the control terminal 10 according to the present embodiment. As illustrated in FIG. 2, the control terminal 10 includes a captured image data input unit 11, a display characteristic extraction unit 12, an LUT generation unit 13 as an example of a correction value calculation unit, an image data storage unit 14, an LUT conversion unit 15 as an example of a correction unit, and an image output unit 16.

The captured image data input unit 11 takes respective captured image data as input from the imaging devices 40 that have captured the test patterns 50 projected by the projectors 30, respectively. The captured image data includes projection color information (the characteristic of the projected image) of the projector 30.

The display characteristic extraction unit 12 extracts the display characteristics of the projectors 30 from the captured image data input by the captured image data input unit 11. As the display characteristics of the projectors 30, the display characteristic extraction unit 12 extracts, for example, gradation information and the like from test patterns including gradation (for example, graded change of the brightness and darkness, and/or the deepness and lightness) of three primary colors (red, green, and blue), which are included in the test patterns 50 projected by the projectors 30 included in the captured image data.

Also, the display characteristic extraction unit 12 extracts brightness information, chromaticity information, and the like from test patterns including solid white patterns or patterns corresponding to solid white, which are included in the test patterns 50. The pattern corresponding to the solid white is a pattern that is projected with a range of shade levels of white having a certain width, such as levels 253 to 255 if representing the white by an 8-bit digital signal. Also, it may be a pattern with which the solid white pattern is projected on a predetermined area occupying a half to a quarter in the screen area of the projector 30.

The display characteristic extraction unit 12 extracts the display characteristics of the projectors 30 from the test patterns 50, that include at least one of the gradation information, brightness information, and chromaticity information.

The LUT generation unit 13 calculates correction values (correction information), based on the display characteristics of the projectors 30 extracted by the display characteristic extraction unit 12, for adjustment to reduce the individual differences of the projectors 30. For example, the LUT generation unit 13 may calculate an average value by using the extracted gradation information of the projectors 30, and based on the calculated average value, calculates correction values of the projectors 30.

Also, the LUT generation unit 13 may calculate correction values of the projectors 30, for example, based on the brightness information of a projector 30 having the lowest brightness. Also, the LUT generation unit 13 may calculate correction values of the projectors 30, for example, based on color temperature information of a projector 30 having the highest color temperature. Also, the LUT generation unit 13 generates a look-up table (LUT) that includes input RGB signals of the projectors 30, and output RGB signals that correspond to the correction information.

The image data storage unit 14 stores projection image data (original image data) that is to be projected by the projectors 30. The image data storage unit 14 may store the test patterns 50 that are to be projected by the projectors 30.

The LUT conversion unit 15 converts the projection image data stored in the image data storage unit 14, with reference to the LUT generated by the LUT generation unit 13.

The image output unit 16 outputs the projection information of the projection image data converted by the LUT conversion unit 15. Note that the image output unit 16 may output the test patterns 50 as the projection information that is used for calibration of colors stored in the image data storage unit 14.

<Hardware configuration of control terminal 10>

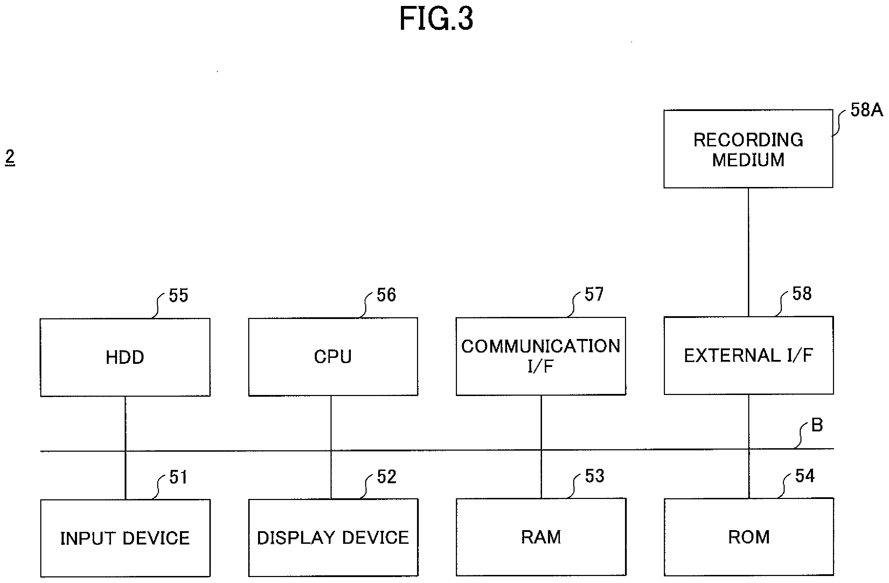

The control terminal 10 described above is implemented, for example, by a computer system 2 having a hardware configuration illustrated in FIG. 3. FIG. 3 is a diagram that illustrates an example of a hardware configuration of the computer system 2.

The computer system 2 illustrated in FIG. 3 includes an input device 51, a display device 52, a RAM (Random Access Memory) 53, a ROM (Read-Only Memory) 54, an HDD (Hard Disk Drive) 55, a CPU (Central Processing Unit) 56, a communication I/F (interface) 57, and an external I/F 58, which are mutually connected by a bus B.

The input device 51 includes a keyboard, a mouse, and a touch panel, which are used by a user to input operational signals. The display device 52 includes a display that displays a result processed by the computer system 2.

The RAM 53 is a volatile semiconductor memory (a storage device) to store programs and data temporarily. The ROM 54 is a non-volatile semiconductor memory (a storage device) that can hold programs and data when the power is turned off. The ROM 54 stores a BIOS (Basic Input/Output System) that is executed when activating the computer system 2, and programs and data for OS (Operation System) setting and network setting.

The HDD 55 is a non-volatile storage device that stores programs and data. The stored programs and data include, for example, an OS that is basic software to control the computer system 2 as a whole, and application software that provides various functions on the OS.

The HDD 55 manages the stored programs and data by a predetermined file system and/or DBs (databases).

Note that the computer system 2 may include an SSD (Solid State Drive) instead of the HDD 55.

The CPU 56 is a processor that implements control and functions of the computer system 2 as a whole, by reading the programs and data into the RAM 53 from the storage device such as the ROM 54 and the HDD 55, and executing processes.

The communication I/F 57 is an interface to have the computer system 2 connected with a network. Thus, the computer system 2 executes data communication via the communication I/F 57.

The external I/F 58 is an interface with external devices. The external devices include a recording medium 58A. Thus, the computer system 2 can make reads and/or writes on the recording medium 58A via the external I/F 58.

The recording medium 58A may be a flexible disk, a CD (Compact Disk), a DVD (Digital Versatile Disk), an SD memory card, a USB memory (Universal Serial Bus memory) or the like.

The hardware configuration of the computer system 2 makes it possible for the control terminal 10 to implement various processes, which will be described later.

<Flow of output control process>

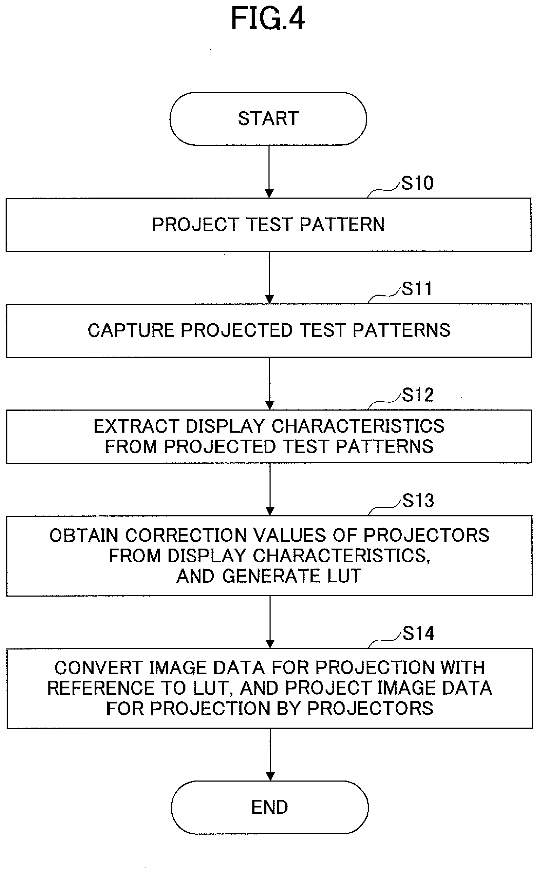

FIG. 4 is a flowchart that illustrates an example of an output control process according to the present embodiment. As illustrated in FIG. 4, the output control system 1 has the control terminal 10 output the test patterns 50 to the projectors 30, and has the projectors 30 project the test patterns 50 on the screen or the like (Step S10).

Next, the output control system 1 captures the test patterns 50 by the imaging devices 40, which are being projected by the projectors 30 (Step S11). Next, the output control system 1 has the control terminal 10 receive the captured image data via the imaging devices 40, to extract the display characteristics of the projectors 30 from the test patterns 50 projected by the projectors 30 (Step S12).

Next, the output control system 1 has the control terminal 10 calculate correction values (correction information), based on the display characteristics of the projectors 30 extracted by the display characteristic extraction unit 12, to generate an LUT for adjustment to reduce the individual differences of the projectors 30 (Step S13).

Next, the output control system 1 has the control terminal 10 convert the projection image data with reference to the LUT generated at Step S13, to output the converted projection image data to the projectors 30, and to have the projectors 30 project the projection image data (Step S14); then, the process ends.

Note that the output control process described above may be executed at various timings, such as when displaying an image on the large screen by the multi projection, when changing a place where the multi projection is used, periodically, or when the multi projection system is shipped.

<Test patterns 50>

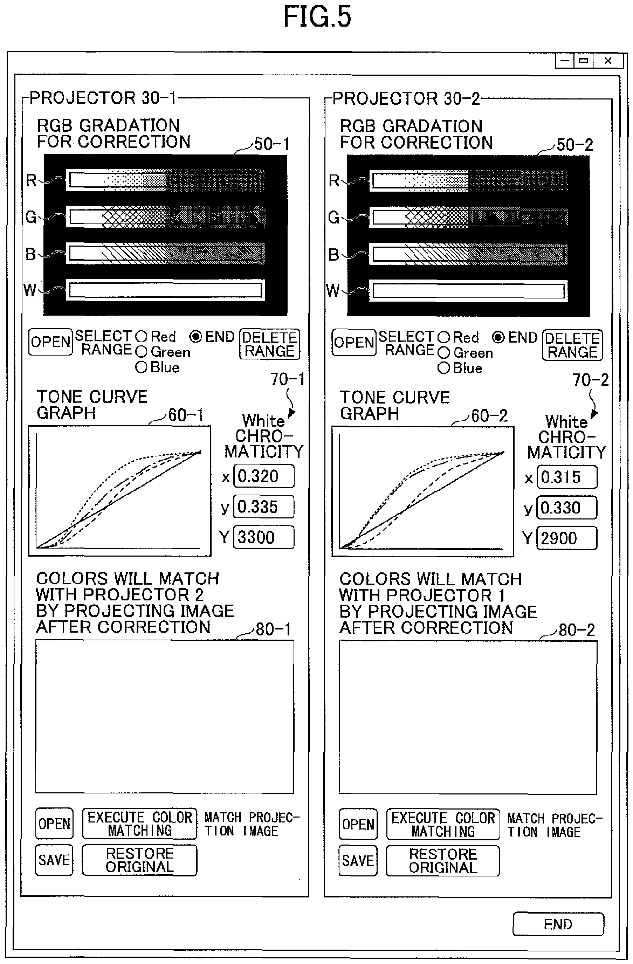

FIG. 5 is a diagram that illustrates an example of the test patterns 50 according to the present embodiment. In the example in FIG. 5, on an adjustment screen on the control terminal 10, test patterns 50 projected by, for example, two projectors 30 are shown. In an actual case, an adjustment screen is displayed for the projectors 30 that are used. Note that test patterns 50 illustrated in FIG. 5 are obtained by the control terminal 10 via the imaging devices 40.

The test patterns 50-1 illustrated in FIG. 5 are, for example, test patterns projected by the projector 30-1. The test patterns 50-2 illustrated in FIG. 5 are, for example, test patterns projected by the projector 30-2.

In the example in FIG. 5, the test patterns 50 are two types that are, for example, gradations of RGB, and a solid white pattern or a pattern corresponding to solid white. Gradation information as the display characteristics of the projectors 30 may be extracted from the test patterns that include the gradations of RGB. Also, the brightness information and the chromaticity information may be extracted from the test pattern that includes white.

Although the chromaticity may be adjusted for the colors of RGB here, adjustment is prioritized for conspicuous ones in terms of individual differences of the projectors 30, for example, the gradation information (referred to as the "gamma characteristic" below), the brightness information (referred to as the "brightness" below), and the chromaticity information (referred to as the "color temperature" below).

Tone curve graphs 60 illustrated in FIG. 5 represent the gamma characteristics of the projectors 30 that correspond to selected areas of the test patterns 50 illustrated in FIG. 5, respectively. The white chromaticities 70 illustrated in FIG. 5 represent the chromaticities and the brightness (x, y, Y) calculated from the white patterns in the test patterns 50 illustrated in FIG. 5 where the chromaticity is represented by (x, y), and the brightness is represented by (Y). Note that for the gamma characteristics and the brightness, average values are used that are obtained in the selected areas, respectively.

In screens 80 illustrated in FIG. 5, for example, the gamma characteristics of RGB and the white chromaticities of the projector 30-1 and the projector 30-2 are compared relatively, and projection images are displayed that are converted based on correction values for adjustment to reduce the differences.

As an adjustment method to reduce the individual differences, for example, the average value of the gamma characteristics of the multiple projectors 30 is calculated, and the gamma characteristics of the projectors 30 are adjusted to be the calculated average value. Also, the brightness of the projectors 30 may be adjusted by setting a projector 30 having the lowest average brightness as a reference, and lowering the brightness of the other projectors 30. Also, a projector 30 having the highest color temperature may be set as a reference, and the other projectors 30 are adjusted by raising their color temperatures. Alternatively, these may be combined so that a projector 30 having the lowest average brightness is set as a reference, and the other projectors 30 are adjusted by lowering their brightness, and at the same time, making their color temperatures closer to each other.

<Gamma characteristic calculated from test pattern 50>

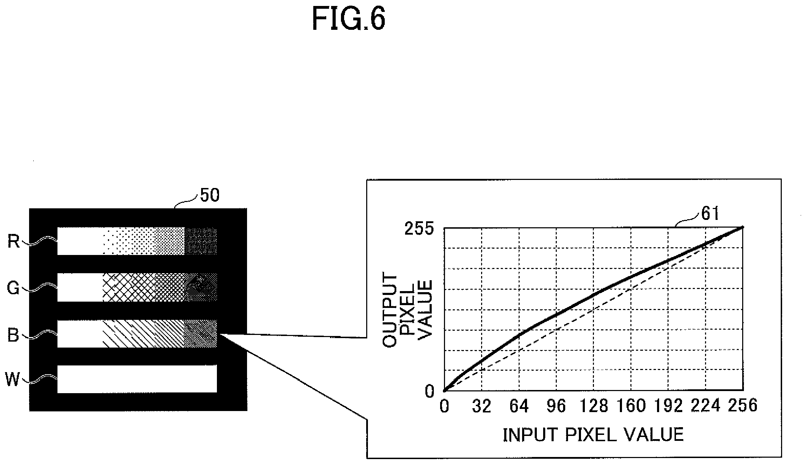

FIG. 6 is a diagram that illustrates an example of a gamma characteristic obtained from test patterns 50. The test patterns 50 illustrated in FIG. 6 correspond the test patterns 50 illustrated in FIG. 5 described above. Also, an output characteristic (a gamma characteristic) 61 illustrated in FIG. 6 corresponds to the test patterns 50 illustrated in FIG. 6. The horizontal axis represents the input pixel value, and the vertical axis represents the output pixel value.

In the gamma characteristic 61 illustrated in FIG. 6, the input pixel value represents the shade level of one of the colors of RGB and white in the test patterns 50, for example, within 0 to 256 shade levels represented by an 8-bit digital signal. Also, if the imaging device 40 is a digital camera, the output pixel value illustrated in FIG. 6 may be represented by, for example, 0 to 255 (eight bits). Note that if not using a digital camera but using a colorimeter, it may be represented by, for example, 0 to several hundred $cd/m^2$.

Note that the gamma characteristic illustrated in FIG. 6 described above may be the average value, for example, in the selected area in the colors in the test patterns 50 illustrated in FIG. 6.

<Gamma characteristics for multiple projectors 30>

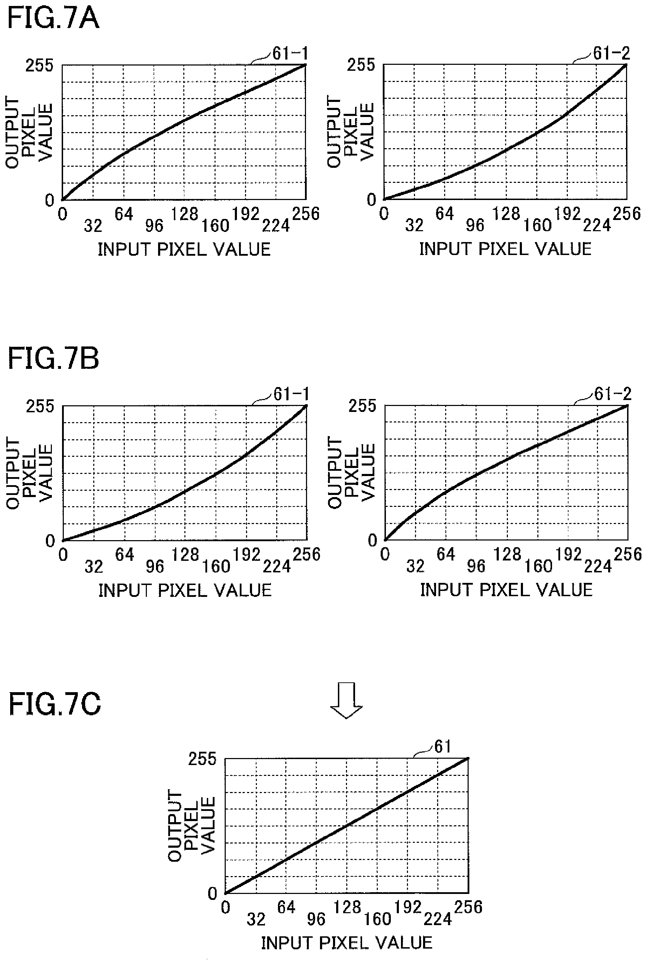

FIGs. 7A-7C are diagrams that illustrate an example of gamma characteristics of multiple projectors. FIG. 7A illustrates the gamma characteristic that corresponds to the test patterns 50 illustrated in FIG. 5 described above. The gamma characteristic 61-1 illustrated in FIG. 7A illustrates a gamma characteristic that is a bit shifted in the brighter direction. The gamma characteristic 61-2 illustrated in FIG. 7A illustrates a gamma characteristic that is a bit shifted in the darker direction.

As illustrated in FIG. 7A, if the gamma characteristics of two projectors 30 are different, it is possible to have the left and right gamma characteristics closer to each other by, for example, generating an LUT having a reverse gamma characteristic, and using the LUT for the correction. Note that the reciprocal of the original gamma value may be taken to calculate the reverse gamma characteristic.

The example in FIG. 7B illustrates a correction example that uses LUTs having reverse gamma characteristics with respect to the gamma characteristic 61-1 and the gamma characteristic 61-2 illustrated in FIG. 7A, respectively. For example, the gamma characteristic 61-1 illustrated in FIG. 7B corresponds to an example having a gamma correction applied for adjusting a bit in the darker direction. For example, the gamma characteristic 61-2 illustrated in FIG. 7B corresponds to an example having a gamma correction applied for adjusting a bit in the brighter direction.

By correcting the gamma characteristics illustrated in FIG. 7A by using the LUTs illustrated in FIG. 7B described above, respectively, it is possible to have the gamma characteristics of the two projectors 30 closer to each other so that they have, for example, the gamma characteristic 61 illustrated in FIG. 7C. Note that although the gamma characteristic 61 illustrated in FIG. 7C is assumed to have, for example, the average value of values calculated from the multiple projectors 30 used in multi projection, it is not limited to that.

<Adjustment example of gamma characteristics of projectors>

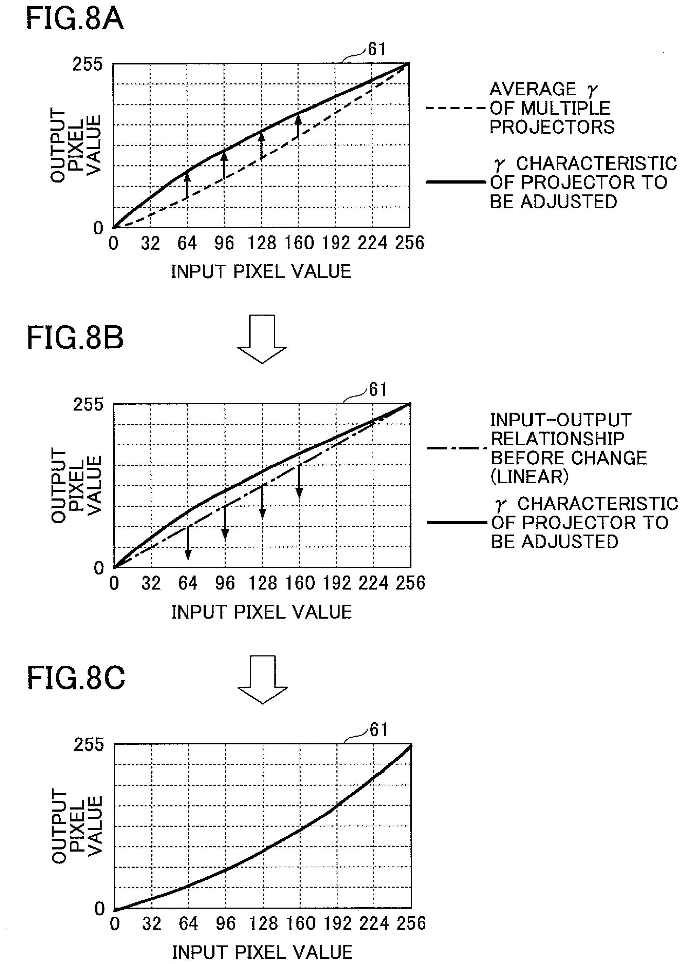

FIGs. 8A-8C are diagrams that illustrate an example of adjustment of gamma characteristics of projectors. In the example in FIGs. 8A-8C, an example will be described that adjusts the gamma characteristics of, for example, two or more projectors.

The solid line in FIG. 8A represents an example of a gamma characteristic of a projector 30 to be adjusted. The dotted line illustrated in FIG. 8A represents an average gamma of multiple projectors 30. If there are two or more projectors 30 as in this example, the average gamma of the multiple projectors 30 is calculated, and the difference between the calculated average gamma and the gamma characteristic of the projector 30 to be adjusted is calculated.

The dashed-dotted line illustrated in FIG. 8B represents an input/output characteristic (linear) before change. The input/output characteristic before the change illustrated in FIG. 8B (for example, 0 to 0, 128 to 128, and 255 to 255) is subtracted by the difference between the calculated average gamma and the gamma characteristic of the projector 30 to be adjusted, to calculate an input/output characteristic used for the gamma correction,

The solid line illustrated in FIG. 8C represents an input/output characteristic used for the gamma correction to be applied to the projector 30 to be adjusted in FIG. 8A (for example, 0 to 0, 128 to 100, and 255 to 255).

As described above, by calculating the input/output characteristic used for the gamma correction for each of the projectors 30, it is possible to adjust the gamma characteristics of the multiple projectors 30. Note that the colors of RGB may have different gamma characteristics. Therefore, by applying gamma corrections described above to the colors of RGB, respectively, correction precision can be improved.

<Color temperatures of multiple projectors 30>

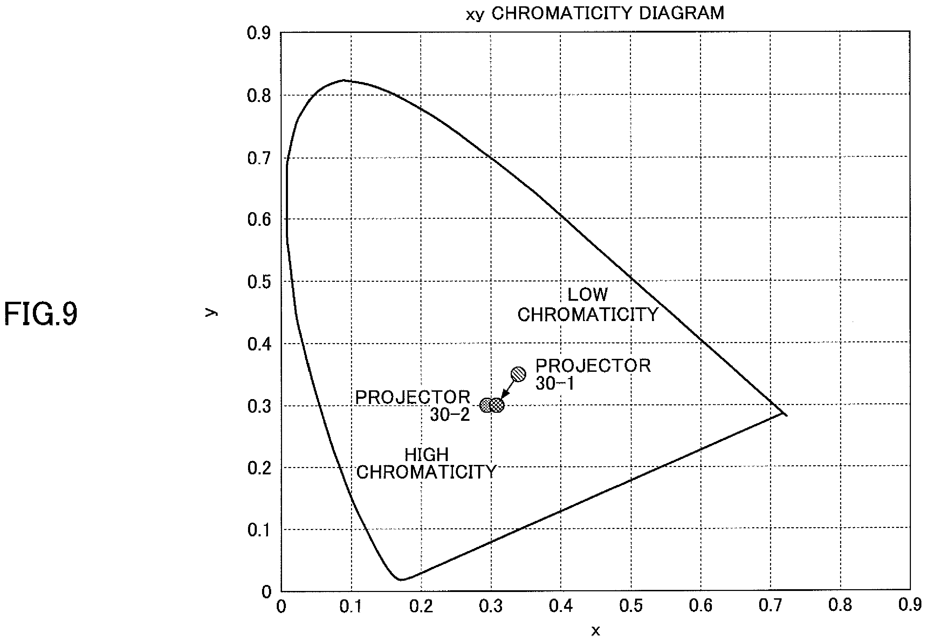

FIG. 9 is a diagram that illustrates color temperatures of multiple projectors 30. The example in FIG. 9 illustrates an xy chromaticity diagram in which color temperatures of the projector 30-1 and the projector 30-2 are shown. Note that in the xy chromaticity diagram illustrated in FIG. 9, for example, a higher color temperature implies that it is closer to blue (in the lower left direction in the xy chromaticity diagram). Also, for example, a lower color temperature implies that it is closer to red (in the upper right direction in the xy chromaticity diagram).

In the example in FIG. 9, the projector 30-1 has its color temperature positioned relatively lower compared to the projector 30-2. Therefore, the color temperature of the projector 30-1 is raised to match with the higher color temperature of the projector 30-2. Although adjustment is applied in this way to reduce the difference between the color temperatures of the two projectors 30, it is not limited to that.

In the example in FIG. 9, the color temperature of the projector 30-1 is made higher by lowering values of red and green relatively, and strengthening the component of blue. Note that although the brightness is also lowered by lowering values of red and green, the difference of color temperatures makes the individual differences seemingly greater in multi projection, adjustment of the color temperature can be prioritized.

Note that it is preferable to use a color space that is more generic than the RGB space, to adjust the color temperature and the brightness. Therefore, an example will be described using the XYZ color system. Conversion from the RGB to the XYZ may use the following formulas. It is assumed that, for example, 8-bit information of 0 to 255 is normalized into 0 to 1 in the RGB, and the range of the XYZ is 0 to 1.

<Conversion from RGB to XYZ(x, y, Y)>

If operating on the monitor illustrated in FIG. 5 described above, the RGB are raised to the power of 2.2, which is a gamma characteristic of a generic monitor, to be corrected to the $R_{org}G_{org}B_{org}$ values having the gamma characteristic removed.

$$R_{org}=R^{2.2}$$
$$G_{org}=G^{2.2}$$
$$B_{org}=B^{2.2} \quad (Formulas\ 1)$$

Next, by the following formulas, the $R_{org}G_{org}B_{org}$ values are converted to $X_{org}Y_{org}Z_{org}$ values.

$$X_{org}=0.3933*R_{org}+0.3651*G_{org}+0.1903*B_{org}$$
$$Y_{org}=0.2123*R_{org}+0.7010*G_{org}+0.0858*B_{org}$$
$$Z_{org}=0.0182*R_{org}+0.1117*G_{org}+0.9570*B_{org}$$
$$(Formulas\ 2)$$

To change the brightness while maintaining the xy chromaticity (color tone), the $X_{org}Y_{org}Z_{org}$ values are increased or decreased by the same ratio. For example, if desiring to make the brightness 0.9 times greater, $X_{mod}Y_{mod}Z_{mod}$ for such a case are as follows.

$$X_{mod}=0.9*X_{org}$$

$$Y_{mod}=0.9*Y_{org}$$

$$Z_{mod}=0.9*Z_{org}$$

<Conversion from XYZ(x, y, Y) to RGB>

By converting the $X_{mod}Y_{mod}Z_{mod}$ described above back into RGB values by formulas below, the brightness can be changed while maintaining the xy chromaticity. Since the XYZ values and the xy chromaticity have the following relationship, if the relative ratios of the XYZ values are the same, the xy chromaticity is constant.

$$x=X/(X+Y+Z)$$
$$y=Y/(X+Y+Z) \quad (Formulas\ 3)$$

Next, if desiring the color temperatures to match with each other, the xy chromaticity, and the Y value as the brightness are converted into $X_{tmp}Y_{tmp}Z_{tmp}$ values.

$$X_{tmp}=Y*x/y$$

$$Y_{tmp}=Y$$

$$Z_{tmp}=Y*(1-x-y)/y \quad (Formulas\ 4)$$

The $X_{tmp}Y_{tmp}Z_{tmp}$ values described above are converted into $R_{tmp}G_{tmp}B_{tmp}$ by the following formulas.

$$R_{tmp}=3.5064*X_{tmp}-1.7400*Y_{tmp}-0.5441*Z_{tmp}$$

$$G_{tmp}=-1.0690*X_{tmp}+1.9777*Y_{tmp}+0.0352*Z_{tmp}$$

$$B_{tmp}=0.0563*X_{tmp}-0.1970*Y_{tmp}+1.0511*Z_{tmp}$$

$$(Formulas\ 5)$$

Note that to have the monitor display the image appropriately, these are raised to the power of 1/2.2 to take the gamma characteristic into consideration.

$$R_{aim}=R_{tmp}^{1/2.2}$$

$$G_{aim}=G_{tmp}^{1/2.2}$$

$$B_{aim}=B_{tmp}^{1/2.2} \quad (Formulas\ 6)$$

Note that although 2.2 exemplified in Formulas 6 described above is a generic numerical value as the gamma characteristic, it is not limited to that; for example, 1.8 or 2.4 may be used.
Next, a case will be described where the chromaticity (x, y, Y) of the projector 30-1 illustrated in FIG. 9 is (0.325, 0.330, 0.90), and the chromaticity (x, y, Y) of the projector 30-2 is (0.310, 0.325, 0.85). As described above, since the color temperature of the projector 30-2 is comparatively higher than the color temperature of the projector 30-1, the color temperature of the projector 30-1 will be raised.
Using Formulas 3 to Formulas 6 described above, the projector 30-1 has values of (R, G, B)=(255, 239, 238). The projector 30-2 has values of (R, G, B)=(236, 237, 241).
Values to be output for raising the color temperature for input values (255, 255, 255) of white of the projector 30-1 are (255*236/255=236, 255*237/239=253, 255*241/238=258), reflecting the relative relationship between both.

Here, a value greater than or equal to 256 is fixed to 255. Alternatively, they may be normalized so that the maximum value is 255. In this case, the values to be output are (233, 250, 255). Although the amount of calculation is a bit increased in this case, precision of the color temperature is further higher.

The values to be output for the input values (255, 255, 255) of white of the projector 30-1 are (236, 253, 255). Alternatively, they may be (233, 250, 255) as described above. Thus, values of red and green of the projector 30-1 are lowered appropriately. Note that the above formulas for mutual conversion between the RGB and the XYZ assume that the color reproduction range of the projectors is compliant with the sRGB. If it is different from that of the sRGB, the coefficients in Formulas 2 and Formulas 5 may be set accordingly.

Values of (x, y, Y) obtained by measurement as described above include noise light in the neighborhood. Therefore, to reduce the influence of the noise light, for example, the amount of bias of the noise light ($C_1$, $C_2$, $C_3$) may be subtracted from the XYZ values calculated by Formulas 4 as in the following formulas. By applying Formulas 5 then, the precision can be improved even further.

$$X_{tmp} = Y * x/y - C_1$$

$$Y_{tmp} = Y - C_2$$

$$Z_{tmp} = Y * (1-x-y)/y - C_3 \quad (\text{Formulas 7})$$

Note that instead of raising the color temperature of the projector 30-1, the brightness may be adjusted to match with the lower one while maintaining the chromaticity. In this case, by using Formulas 1 and Formulas 2 described above, the brightness of the projector 30-1 may be lowered to match with the brightness of the projector 30-2.

Although the calculation example described above illustrates an example that uses the XYZ color system of generic use, it not limited to that. For example, another color space such as the CIELAB or $YC_bC_r$ may be used.

<Adjustment example of multiple projectors>

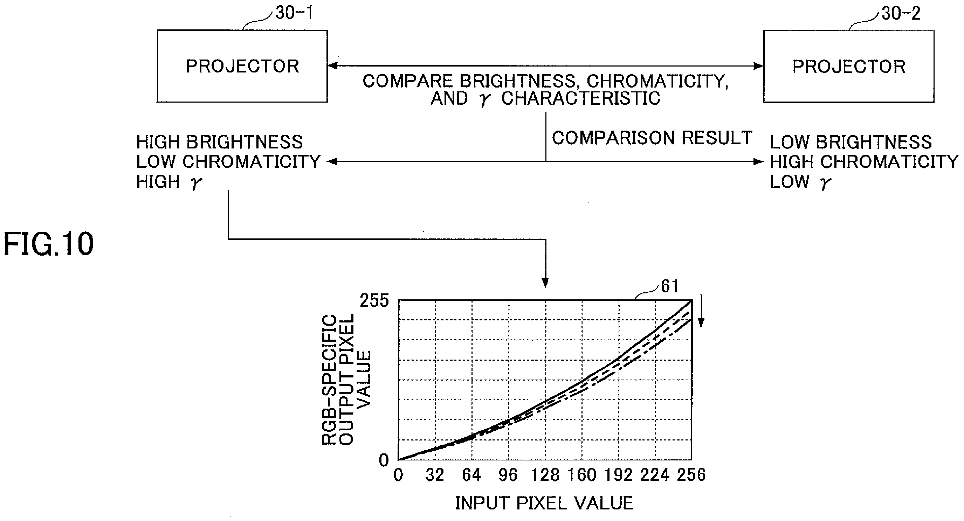

FIG. 10 is a diagram that illustrates an example of adjustment of multiple projectors. As illustrated in FIG. 10, individual differences are detected for the projector 30-1 and the projector 30-2, by comparing, for example, the brightness, the color temperatures, and the gamma (gradation) characteristics, respectively.

In the example in FIG. 10, for example, the projector 30-1 has a higher brightness, a lower color temperature, and a higher gamma, compared to those of the projector 30-2. In such a case, a process is applied to the projector 30-1 to reduce the brightness that lowers the peak of the output pixel value. Also, the color temperature is made higher for the projector 30-1, for example, by lowering the values of red and green relatively compared to blue. Also, the gamma is made lower for the projector 30-1, by making the gamma characteristic to be concave-shaped.

Here, a case will be described where a look-up table (LUT) is generated that is used for a correction of the projector 30-1. As a result of the comparison illustrated in FIG. 10, if the white chromaticity of the projector 30-1 is adjusted to be (x, y, Y)=(0.305, 0.322, 0.93), the conversion of (x, y, Y) -> (X, Y, Z) -> (R, G, B) described above makes (R, G, B)=(242, 247, 255). These RGB ratios are (0.95, 0.97, 1.00).

As the gamma correction of the projector 30-1, for example, if the input/output characteristic illustrated in FIG. 8C is calculated, the RGB ratios (0.95, 0.97, 1.00) described above are reflected in the input/output characteristic illustrated in FIG. 10 at a part designated by an arrow. Thus, it is possible to generate an LUT for correcting the gamma characteristic and the color temperature of the projector 30-1.

<Example of look-up table (LUT)>

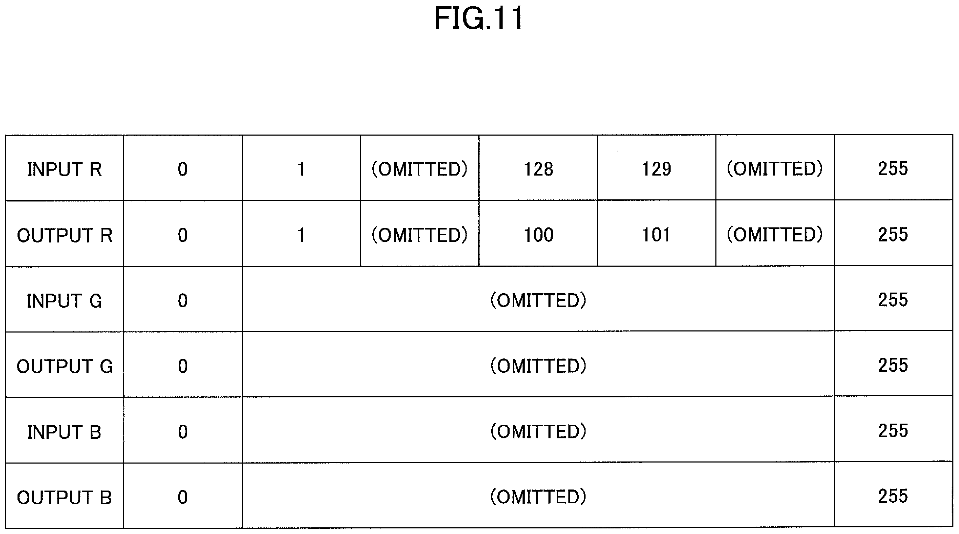

FIG. 11 is a diagram that illustrates an example of a look-up table used for correction. The control terminal 10 generates LUTs for the respective projectors 30 by the adjustment described above, and stores the LUTs in a memory or the like.

In an LUT illustrated in FIG. 11, for example, the input/output relationship of pixel values is illustrated for RGB signals, respectively. In the example in FIG. 11, input RGB signals of a projector 30 are associated with output RGB signals, respectively, which represent correction values (correction information).

With reference to the LUT, the control terminal 10 uses the output pixel values having been associated with the original pixel values (the input pixel values) for projection image data to be projected actually (a projection image), and outputs the projection image to the corresponding one of the projectors 30. In this way, the projectors 30 can project the projection image data having the correction values reflected, respectively. Note that the LUT is not limited to this.

In the embodiment described above, although two projectors 30 are used, it is also applicable to multi projection using more than two projectors. Even if the number of projectors increases, it is possible to reduce the individual differences efficiently, and to improve the display quality. Note that since DLP projectors have extremely low reflectance for black, the individual differences are low for black. Therefore, it is favorably applicable to DLP projectors, yet it is also applicable to other projectors, LCD monitors, and the like.

According to the embodiments described above, information about change over the years and the like do not need to be stored in advance, and control parts of projectors and large-scale LUTs are not required. Therefore, for example, just by using cameras or the like, it is possible to reduce individual differences for multi projection in a short time with high precision. Thus, it is possible to adjust display quality in multi projection efficiently.

Note that the output device of projection image data in the present embodiment is not limited to a projector, but it may be a monitor, for example, an LCD. Also, in the embodiments described above, although examples are described in which colors are corrected for projection image data to be output by projectors used for multi projection, it is not limited to those. For example, when shipping output devices, the performances of the individual products need to be confirmed. The method of the output control system described above can be applied to these products to have them output the same projection image data. In this case, to have the individual output devices output projection image data without color differences, color correction and the like may be applied based on the average values and the like set in advance.

Further, the present invention is not limited to these embodiments, but various variations and modifications may be made without departing from the scope of the present invention.

[Related-Art Documents]

[Patent Documents]

[Patent Document 1] Japanese Laid-open Patent Publication No. 2002-72359

The present application is based on and claims the benefit of priority of Japanese Priority Application No. 2014-188745 filed on September 17, 2014, with the Japanese Patent Office.

**Claims**

**1.** An output control apparatus (10), configured to control color information of projection image data to be output to one or more output devices (30), comprising:

a display characteristic extraction unit (12) configured to extract a display characteristic of the output device (30) from test patterns having been output from the output device (30), and including at least one of gradation information, brightness information, and chromaticity information;
a correction value calculation unit (13) configured to calculate a correction value of the output device (30), based on the display characteristic obtained by the display characteristic extraction unit (12); and
a correction unit (15) configured to correct the projection image data to be output to the output device (30), based on the correction value calculated by the correction value calculation unit (13);

**characterized in that**:

sampling points used to calculate the correction values are spread in an entire projection surface;
the correction values are calculated from data that is obtained by capturing an image of the projection surface as a whole; and
the sampling points are continuous.

**2.** The output control apparatus (10), as claimed in claim 1, wherein the display characteristic extraction unit (12) extracts the gradation information from one of the test patterns including gradations of three primary colors.

**3.** The output control apparatus (10), as claimed in claim 1, wherein the display characteristic extraction unit (12) extracts the brightness information or the chromaticity information from one of the test patterns including a solid white pattern, or a pattern corresponding to the solid white pattern.

**4.** The output control apparatus (10), as claimed in any one of claims 1 to 3, wherein the correction unit (15) uses a look-up table having an input color signal of the output device, and an output color signal calculated by the correction value calculation unit (13) as a correction value.

5. The output control apparatus (10), as claimed in any one of claims 1 to 4, wherein the correction value calculation unit (13) calculates an average value of the gradation information of the output devices (30), and based on the calculated average value, calculates the correction value of each of the output devices (30).

6. The output control apparatus (10), as claimed in any one of claims 1 to 5, wherein the correction value calculation unit (13) calculates the correction value of each of the output devices (30), based on the brightness information of one of the output devices (30) having lowest brightness information.

7. The output control apparatus (10), as claimed in any one of claims 1 to 6, wherein the correction value calculation unit (13) calculates the correction value of each of the output devices (30), based on the chromaticity information of one of the output devices (30) having highest chromaticity information.

8. The output control apparatus (10), as claimed in any one of claims 1 to 7, wherein the output device (30) is a projector or a monitor.

9. An output control system (1), including one or more output devices (30), and an output control apparatus (10) configured to control color information of projection image data to be output to the output devices (30), comprising:

a display characteristic extraction unit (12) configured to extract a display characteristic of the output device (30) from a test pattern having output from the output device (30), and including at least one of gradation information, brightness information, and chromaticity information;
a correction value calculation unit (13) configured to calculate a correction value of the output device (30), based on the display characteristic obtained by the display characteristic extraction unit (12); and
a correction unit (15) configured to correct the projection image data to be output to the output device (30), based on the correction value calculated by the correction value calculation unit (13);

**characterized in that**:

sampling points used to calculate the correction values are spread in an entire projection surface;
the correction values are calculated from data that is obtained by capturing an image of the projection surface as a whole; and
the sampling points are continuous.

10. A non-transitory computer-readable recording medium having a program stored therein for causing a computer to function as the units included in the output control apparatus (10), as claimed in any one of claims 1 to 8.


**Patentansprüche**

1. Ausgabesteuervorrichtung (10), die konfiguriert ist, Farbinformationen von Projektionsbilddaten, die zu einer oder mehreren Ausgabeeinrichtungen (30) ausgegeben werden sollen, zu steuern, die Folgendes umfasst:

eine Anzeigeeigenschaftsextraktionseinheit (12), die konfiguriert ist, eine Anzeigeeigenschaft der Ausgabeeinrichtung (30) von Prüfmustern, die von der Ausgabeeinrichtung (30) ausgegeben worden sind und die Abstufungsinformationen, Helligkeitsinformationen und/oder Farbartinformationen enthalten, zu extrahieren;
eine Korrekturwertberechnungseinheit (13), die konfiguriert ist, einen Korrekturwert der Ausgangseinrichtung (30) auf der Grundlage der Anzeigeeigenschaft, die durch die Anzeigeeigenschaftsextraktionseinheit (12) erhalten wurde, zu berechnen; und
eine Korrektureinheit (15), die konfiguriert ist, die Projektionsbilddaten, die zur Ausgabeeinrichtung (30) ausgegeben werden sollen, auf der Grundlage des Korrekturwertes, der durch die Korrekturwertberechnungseinheit (13) berechnet wurde, zu korrigieren;

**dadurch gekennzeichnet, dass**

Abtastpunkte, die verwendet werden, um die Korrekturwerte zu berechnen, in einer gesamten Projektionsfläche ausgebreitet sind;
die Korrekturwerte aus Daten, die durch Aufnehmen eines Bildes der Projektionsfläche als Ganzes erhalten werden, berechnet werden; und

die Abtastpunkte kontinuierlich sind.

2.  Ausgabesteuervorrichtung (10) nach Anspruch 1, wobei die Anzeigeeigenschaftsextraktionseinheit (12) die Abstufungsinformationen aus einem der Testmuster, die Abstufungen von drei Primärfarben enthalten, extrahiert.

3.  Ausgabesteuervorrichtung (10) nach Anspruch 1, wobei die Anzeigeeigenschaftsextraktionseinheit (12) die Helligkeitsinformationen oder die Farbartinformationen aus einem der Testmuster extrahiert, die ein solides Weißmuster oder ein Muster, das dem soliden Weißmuster entspricht, enthalten.

4.  Ausgabesteuervorrichtung (10) nach einem der Ansprüche 1 bis 3, wobei die Korrektureinheit (15) eine Nachschlagtabelle, die ein Eingangsfarbsignal der Ausgabeeinrichtung und ein Ausgangsfarbsignal, das durch die Korrekturwertberechnungseinheit (13) berechnet wird, als einen Korrekturwert enthält, verwendet.

5.  Ausgabesteuervorrichtung (10) nach einem der Ansprüche 1 bis 4, wobei die Korrekturwertberechnungseinheit (13) einen Durchschnittswert der Abstufungsinformationen der Ausgabeeinrichtungen (30) berechnet und auf der Grundlage des berechneten Durchschnittswerts den Korrekturwert von jeder der Ausgabeeinrichtungen (30) berechnet.

6.  Ausgabesteuervorrichtung (10) nach einem der Ansprüche 1 bis 5, wobei die Korrekturwertberechnungseinheit (13) den Korrekturwert von jeder der Ausgabeeinrichtungen (30) auf der Grundlage der Helligkeitsinformationen von einer der Ausgabeeinrichtungen (30), die die niedrigsten Helligkeitsinformationen besitzt, berechnet.

7.  Ausgabesteuervorrichtung (10) nach einem der Ansprüche 1 bis 6, wobei die Korrekturwertberechnungseinheit (13) den Korrekturwert von jeder der Ausgabeeinrichtungen (30) auf der Grundlage der Farbartinformationen von einer der Ausgabeeinrichtungen (30), die die höchsten Farbartinformationen besitzt, berechnet.

8.  Ausgabesteuervorrichtung (10) nach einem der Ansprüche 1 bis 7, wobei die Ausgabeeinrichtung (30) ein Projektor oder eine Überwachungseinrichtung ist.

9.  Ausgabesteuersystem (1), das eine oder mehrere Ausgabeeinrichtungen (30) und eine Ausgabesteuervorrichtung (10), die konfiguriert ist, Farbinformationen von Projektionsbilddaten, die zu den Ausgabeeinrichtungen (30) ausgegeben werden sollen, zu steuern, enthält und das Folgendes umfasst:

    eine Anzeigeeigenschaftsextraktionseinheit (12), die konfiguriert ist, eine Anzeigeeigenschaft der Ausgabeeinrichtung (30) von einem Prüfmuster, das von der Ausgabeeinrichtung (30) ausgegeben worden ist und das Abstufungsinformationen, Helligkeitsinformationen und/oder Farbartinformationen enthält, zu extrahieren;
    eine Korrekturwertberechnungseinheit (13), die konfiguriert ist, einen Korrekturwert der Ausgangseinrichtung (30) auf der Grundlage der Anzeigeeigenschaft, die durch die Anzeigeeigenschaftsextraktionseinheit (12) erhalten wurde, zu berechnen; und
    eine Korrektureinheit (15), die konfiguriert ist, die Projektionsbilddaten, die zur Ausgabeeinrichtung (30) ausgegeben werden sollen, auf der Grundlage des Korrekturwertes, der durch die Korrekturwertberechnungseinheit (13) berechnet wurde, zu korrigieren;

    **dadurch gekennzeichnet, dass**

    Abtastpunkte, die verwendet werden, um die Korrekturwerte zu berechnen, in einer gesamten Projektionsfläche ausgebreitet sind;
    die Korrekturwerte aus Daten, die durch Aufnehmen eines Bildes der Projektionsfläche als Ganzes erhalten werden, berechnet werden; und
    die Abtastpunkte kontinuierlich sind.

10. Nichttransitorisches computerlesbares Aufzeichnungsmedium, in dem ein Programm gespeichert ist, um zu bewirken, dass ein Computer als die Einheiten, die in der Ausgabesteuervorrichtung (10) nach einem der Ansprüche 1 bis 8 enthalten sind, wirkt.

**Revendications**

1.  Appareil de commande de sortie (10), configuré pour commander des informations de couleur de données d'image de projection destinées à être envoyées à un ou plusieurs dispositifs de sortie (30), comprenant :

une unité d'extraction de caractéristique d'affichage (12) configurée pour extraire une caractéristique d'affichage du dispositif de sortie (30) à partir de motifs d'essai ayant été sortis du dispositif de sortie (30), et incluant des informations de gradation, et/ou des informations de luminosité, et/ou des informations de chromaticité ;
une unité de calcul de valeur de correction (13) configurée pour calculer une valeur de correction du dispositif de sortie (30), sur la base des caractéristique d'affichage obtenues par l'unité d'extraction de caractéristique d'affichage (12) ; et
une unité de correction (15) configurée pour corriger les données d'image de projection destinées à être envoyées au dispositif de sortie (30), sur la base de la valeur de correction calculée par l'unité de calcul de valeur de correction (13) ;

**caractérisé en ce que** :

des points d'échantillonnage utilisés pour calculer les valeurs de correction sont répartis dans une surface de projection entière ;
les valeurs de correction sont calculées à partir de données qui sont obtenues par l'intermédiaire de la capture d'une image de la surface de projection dans l'ensemble ; et
les points d'échantillonnage sont continus.

2. Appareil de commande de sortie (10) selon la revendication 1, dans lequel l'unité d'extraction de caractéristique d'affichage (12) extrait les informations de gradation à partir d'un des motifs d'essai incluant des gradations de trois couleurs primaires.

3. Appareil de commande de sortie (10) selon la revendication 1, dans lequel l'unité d'extraction de caractéristique d'affichage (12) extrait les informations de luminosité ou les informations de chromaticité à partir d'un des motifs d'essai incluant un motif blanc uni, ou un motif correspondant au motif blanc uni.

4. Appareil de commande de sortie (10) selon l'une quelconque des revendications 1 à 3, dans lequel l'unité de correction (15) utilise une table de conversion ayant un signal de couleur d'entrée du dispositif de sortie, et un signal de couleur de sortie calculé par l'unité de calcul de valeur de correction (13) en tant que valeur de correction.

5. Appareil de commande de sortie (10) selon l'une quelconque des revendications 1 à 4, dans lequel l'unité de calcul de valeur de correction (13) calcule une valeur moyenne des informations de gradation des dispositifs de sortie (30), et, sur la base de la valeur moyenne calculée, calcule la valeur de correction de chacun des dispositifs de sortie (30).

6. Appareil de commande de sortie (10) selon l'une quelconque des revendications 1 à 5, dans lequel l'unité de calcul de valeur de correction (13) calcule la valeur de correction de chacun des dispositifs de sortie (30), sur la base des informations de luminosité d'un des dispositifs de sortie (30) ayant des informations de luminosité la plus basse.

7. Appareil de commande de sortie (10) selon l'une quelconque des revendications 1 à 6, dans lequel l'unité de calcul de valeur de correction (13) calcule la valeur de correction de chacun des dispositifs de sortie (30), sur la base des informations de chromaticité d'un des dispositifs de sortie (30) ayant des informations de chromaticité la plus élevée.

8. Appareil de commande de sortie (10) selon l'une quelconque des revendications 1 à 7, dans lequel le dispositif de sortie (30) est un projecteur ou un moniteur.

9. Système de commande de sortie (1) incluant un ou plusieurs dispositifs de sortie (30), et un appareil de commande de sortie (10) configuré pour commander des informations de couleur de données d'image de projection destinées à être envoyées aux dispositifs de sortie (30), comprenant :

une unité d'extraction de caractéristique d'affichage (12) configurée pour extraire une caractéristique d'affichage du dispositif de sortie (30) à partir d'un motif d'essai ayant été sorti du dispositif de sortie (30), et incluant des informations de gradation, et/ou des informations de luminosité, et/ou des informations de chromaticité ;
une unité de calcul de valeur de correction (13) configurée pour calculer une valeur de correction du dispositif de sortie (30), sur la base des caractéristique d'affichage obtenues par l'unité d'extraction de caractéristique d'affichage (12) ; et

une unité de correction (15) configurée pour corriger les données d'image de projection destinées à être envoyées au dispositif de sortie (30), sur la base de la valeur de correction calculée par l'unité de calcul de valeur de correction (13) ;

**caractérisé en ce que** :

des points d'échantillonnage utilisés pour calculer les valeurs de correction sont répartis dans une surface de projection entière ;
les valeurs de correction sont calculées à partir de données qui sont obtenues par l'intermédiaire de la capture d'une image de la surface de projection dans l'ensemble ; et les points d'échantillonnage sont continus.

10. Support d'enregistrement non transitoire lisible par ordinateur ayant un programme stocké dans celui-ci pour faire en sorte qu'un ordinateur servent d'unités incluses dans l'appareil de commande de sortie (10), selon l'une quelconque des revendications 1 à 8.

FIG.1

# FIG.2

IMAGE DATA
FOR PROJECTION

10

13
LUT GENERATION
UNIT

15
LUT CONVERSION
UNIT

16
IMAGE OUTPUT
UNIT

12
DISPLAY
CHARACTERISTIC
EXTRACTION UNIT

14
IMAGE DATA
STORAGE UNIT

11
CAPTURED IMAGE
DATA INPUT UNIT

CAPTURED
IMAGE DATA

EP 2 999 219 B1

# FIG.3

# FIG.4

START

S10

PROJECT TEST PATTERN

S11

CAPTURE PROJECTED TEST PATTERNS

S12

EXTRACT DISPLAY CHARACTERISTICS
FROM PROJECTED TEST PATTERNS

S13

OBTAIN CORRECTION VALUES OF PROJECTORS
FROM DISPLAY CHARACTERISTICS,
AND GENERATE LUT

S14

CONVERT IMAGE DATA FOR PROJECTION WITH
REFERENCE TO LUT, AND PROJECT IMAGE DATA
FOR PROJECTION BY PROJECTORS

END

# FIG.5

## PROJECTOR 30-1

RGB GRADATION FOR CORRECTION  50-1

R
G
B
W

OPEN | SELECT RANGE: ○ Red ● END | DELETE RANGE
○ Green
○ Blue

TONE CURVE GRAPH  60-1

70-1

White
CHRO-MATICITY

x [0.320]
y [0.335]
Y [3300]

COLORS WILL MATCH WITH PROJECTOR 2 BY PROJECTING IMAGE AFTER CORRECTION  80-1

OPEN | EXECUTE COLOR MATCHING | MATCH PROJEC-TION IMAGE
SAVE | RESTORE ORIGINAL

## PROJECTOR 30-2

RGB GRADATION FOR CORRECTION  50-2

R
G
B
W

OPEN | SELECT RANGE: ○ Red ● END | DELETE RANGE
○ Green
○ Blue

TONE CURVE GRAPH  60-2

70-2

White
CHRO-MATICITY

x [0.315]
y [0.330]
Y [2900]

COLORS WILL MATCH WITH PROJECTOR 1 BY PROJECTING IMAGE AFTER CORRECTION  80-2

OPEN | EXECUTE COLOR MATCHING | MATCH PROJEC-TION IMAGE
SAVE | RESTORE ORIGINAL

END

# FIG.6

# FIG.7A

# FIG.7B

# FIG.7C

## FIG.8A

255

OUTPUT PIXEL VALUE

0

0  32  64  96  128  160  192  224  256

INPUT PIXEL VALUE

- - - AVERAGE $\gamma$ OF MULTIPLE PROJECTORS

——— $\gamma$ CHARACTERISTIC OF PROJECTOR TO BE ADJUSTED

## FIG.8B

255

OUTPUT PIXEL VALUE

0

0  32  64  96  128  160  192  224  256

INPUT PIXEL VALUE

—·—·— INPUT–OUTPUT RELATIONSHIP BEFORE CHANGE (LINEAR)

——— $\gamma$ CHARACTERISTIC OF PROJECTOR TO BE ADJUSTED

## FIG.8C

255

OUTPUT PIXEL VALUE

0

0  32  64  96  128  160  192  224  256

INPUT PIXEL VALUE

22

FIG.9

FIG.10

EP 2 999 219 B1

# FIG.11

| INPUT R | 0 | 1 | (OMITTED) | 128 | 129 | (OMITTED) | 255 |
|---|---|---|---|---|---|---|---|
| OUTPUT R | 0 | 1 | (OMITTED) | 100 | 101 | (OMITTED) | 255 |
| INPUT G | 0 | (OMITTED) | | | | | 255 |
| OUTPUT G | 0 | (OMITTED) | | | | | 255 |
| INPUT B | 0 | (OMITTED) | | | | | 255 |
| OUTPUT B | 0 | (OMITTED) | | | | | 255 |

EP 2 999 219 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005103976 A
- JP 2002072359 A
- JP 2014188745 A